# EUROPÄISCHE PATENTSCHRIFT

(11) **EP 2 454 472 B1**
(45) Veröffentlichungstag und Bekanntmachung des Hinweises auf die Patenterteilung: **09.03.2016**
(21) Anmeldenummer: 10724720.7
(22) Anmeldetag: 15.06.2010
(51) Int. Cl.: F03D 1/06, B29C 65/00

(54) **ROTORBLATT EINER WINDENERGIEANLAGE SOWIE VERFAHREN ZUM FERTIGEN EINES ROTORBLATTES EINER WINDENERGIEANLAGE**
ROTOR BLADE OF A WIND POWER INSTALLATION AND METHOD OF FABRICATING A ROTOR BLADE OF A WIND POWER INSTALLATION
PALE DE ROTOR D'ÉOLIENNE ET PROCÉDÉ DE FABRICATION D'UNE PALE DE ROTOR D'ÉOLIENNE

(30) Priorität: 13.07.2009 DE 102009033164
(43) Veröffentlichungstag der Anmeldung: 23.05.2012
(73) Patentinhaber: Senvion GmbH, 22297 Hamburg (DE)
(72) Erfinder: KULENKAMPFF, Jens, 24119 Kronshagen (DE); WEEGEN, Claus, 26441 Jever (DE); KONTIS, Mario, 20300 Loutraki (GR)
(74) Vertreter: Seemann, Ralph
(86) Internationale Anmeldenummer: PCT/EP2010/003585
(87) Internationale Veröffentlichungsnummer: WO 2011/006563

(56) Entgegenhaltungen:
- WO-A1-03/035380
- WO-A2-01/46582
- DE-A1-102005 059 298
- GB-A- 458 312
- US-A- 4 732 542
- US-A1- 2008 110 575
- US-A1- 2009 070 977
- US-A1- 2009 162 208

## Beschreibung

Die Erfindung betrifft ein Rotorblatt einer Windenergieanlage, wobei das Rotorblatt eine Längserstreckung aufweist, die sich von einer Rotorblattwurzel im Wesentlichen zu einer Rotorblattspitze erstreckt, wobei wenigstens in einem Bereich des Rotorblatts ein aerodynamisches Querschnittsprofil vorgesehen ist, das eine Profilvorderkante (Nase) und eine Profilhinterkante aufweist, die über eine Saugseite und eine Druckseite des Querschnittsprofils verbunden sind.

Die Erfindung betrifft ferner ein Verfahren zum Fertigen eines entsprechenden Rotorblatts. Außerdem betrifft die Erfindung ein Verfahren zur Herstellung eines Gurtpaares eines Rotorblatts und eine Fertigungsform für die Herstellung eines Gurtpaares zur Verwendung in einem Rotorblatt.

Üblicherweise werden Rotorblätter für Windenergieanlagen in zwei Schalen gebaut, nämlich einer Schale auf der Saugseite des Rotorblatts und einer Schale auf der Druckseite des Rotorblatts und miteinander verklebt. Zwischen den Schalen befinden sich meistens zwei Stege oder Holme, die auf den Gurt für die Saugseite und den Gurt für die Druckseite geklebt werden und für Beulsicherheit im Blatt sorgen. Die Gurte sorgen insbesondere für eine Verwindungs- oder Biegesteifigkeit des Rotorblatts und stellen in Kombination mit den Stegen bzw. Holmen die Tragstruktur des Rotorblatts dar.

Insbesondere bei großen Rotorblättern ist die Herstellung der Rotorblätter zeitaufwändig und kostspielig. Aus diesem Grund werden derartige große Rotorblätter in mehreren Teilen als nur zwei Schalen hergestellt und dann verklebt. Hierdurch werden die Einzelteile kleiner, wodurch sich die Fertigungszeit und die Kosten durch mögliche Fertigungsfehler reduzieren. Hierzu wird beispielsweise auf die DE 31 13 079 A1 und die EP 1 965 074 A2 verwiesen.

Außerdem wird noch auf die WO 03/093672 A1 verwiesen, die ein Rotorblatt für Windenergieanlagen mit einer Schale offenbart, deren Profilquerschnitt gegen Biegung in Schlagrichtung durch sich in Bezug auf die Profilsehne des Rotorblattes paarweise gegenüberliegend vorgesehene Gurte und durch Stege zwischen diesen versteift ist, wobei die Gurte aus in Längsrichtung faserverstärktem Kunststoff bestehen und in Längsrichtung einen glasfaser- und einen karbonfaserverstärkten Abschnitt aufweisen.

US 2009/0162208 A1 offenbart ein Multisegmentrotorblatt einer Windenergieanlage mit wenigstens zwei Blattsegmenten. Es wird ein Holm mit einem vorderen Rotorblattabschnitt und einem hinteren Rotorblattabschnitt verbunden. Der Holm umfasst einen Steg und zwei auf gegenüberliegenden Enden des Steges angeordnete Gurte.

US 2009/0070977 A1 offenbart ein Verfahren und eine Vorrichtung zum Zusammenfügen von Rotorblättern einer Windenergieanlage, wobei ein Holm als Ganzes in Rotorblattsegmente eingebracht wird.

GB 458 312 A offenbart ein Rotorblatt für Flugzeuge.

WO 01/46582 A2 offenbart ein Rotorblatt für eine Windenergieanlage, das aus einer Mehrzahl von Segmentelementen hergestellt ist, die an einem lastübertragenden Holmkasten angesetzt sind.

US 4 732 542 A offenbart ein Rotorblatt zur Benutzung bei großen Windenergieanlagen, wobei das Rotorblatt in drei modularen Sektionen unterteilt ist.

Aus WO 03/035380 A1 ist ein Verfahren zum Herstellen eines Rotorblatts bekannt, bei dem eine Anordnung von Kernen, welche zuvor mit einem Fasermaterial beschichtet wurden, in einer Form angeordnet werden. Die zwischen den Kernen verbleibenden Freiräume werden ausgeschäumt. Anschließend wird die gesamte Anordnung erneut mit Fasern beschichtet, die vakuumkompaktiert und mit Harz infusioniert werden. Die nun erhaltene Struktur wird anschließend einer Endbehandlung unterzogen, um das Rotorblatt zu erhalten.

DE 10 2005 059 298 A1 ist ein System und Verfahren zur passiven Lastminderung bei einer Windenergieanlage zu entnehmen. Ein Rotorblatt dieser Anlage weist eine Außenhaut und eine innere Stützstruktur auf. Die innere Stützstruktur ist innerhalb der geschlossenen Flügelprofilform angeordnet und enthält wenigstens ein eine Scherlast aufnehmendes Element, das sich zwischen den einander gegenüber liegenden Seiten und entlang der Längsrichtung des Flügels erstreckt. Außerdem enthält die innere Stützstruktur biegelasttragende Elemente, die entlang der Innenseite in Längsrichtung des Flügels angeordnet sind.

Es ist Aufgabe der vorliegenden Erfindung, ein einfach und präzise als auch kostengünstig zu fertigendes Rotorblatt, ein entsprechendes Verfahren zum Fertigen dieses Rotorblatts sowie ein effizientes Verfahren zur Herstellung eines Gurtpaares und eine entsprechende Fertigungsform für die Herstellung eines Gurtpaares zur Verwendung in einem entsprechenden Rotorblatt anzugeben.

Gelöst wird diese Aufgabe durch ein Rotorblatt einer Windenergieanlage, wobei das Rotorblatt eine Längserstreckung aufweist, die sich von einer Rotorblattwurzel im Wesentlichen zu einer Rotorblattspitze erstreckt, wobei wenigstens in einem Bereich des Rotorblatts ein aerodynamisches Querschnittsprofil vorgesehen ist, das eine Profilvorderkante (Nase) und eine Profilhinterkante aufweist, die über eine Saugseite und eine Druckseite des Querschnittsprofils verbunden sind, das dadurch weitergebildet ist, dass das Rotorblatt wenigstens in einem längserstreckten Abschnitt in einen vorderen Rotorblattabschnitt mit der Profilvorderkante und einen hinteren Rotorblattabschnitt mit der Profilhinterkante unterteilt ist, wobei der hintere Bereich des vorderen Rotorblattabschnitts und der angrenzende Vorderbereich des hinteren Rotorblattabschnitts durch einen I-Träger verbunden sind, wobei der I-Träger I-Trägerteile aufweist, die einen Steg umfassen, wobei der I Träger in Längserstreckung und flächig in einer Ebene, die durch den Steg definiert ist, geteilt ist, wobei zur Saugseite und zur Druckseite hin jeweils zwei Gurte den I-Träger abschließen, die einen Abstand voneinander aufweisen, der kleiner als die Erstreckung der Gurte in Richtung von der Profilvorderkante zur Profilhinterkante des Rotorblatts ist.

Durch Vorsehen eines I-Trägers, der im Rahmen der Erfindung insbesondere auch als Doppel-T-Träger bezeichnet werden kann, ist eine sehr effiziente und kostengünstige Herstellung eines entsprechenden Rotorblatts möglich. Hierbei kann das Rotorblatt in zwei Hälften vorgefertigt sein und die Verbindung, insbesondere Verklebung von aneinandergrenzenden Stegen, die sich von einer Saugseite zu einer Druckseite erstrecken und die insbesondere mit jeweiligen Gurten zu einem I-Träger verbunden sind, zu einer hohen Stabilität beitragen. Hierbei ist überraschenderweise festgestellt worden, dass ein Bauteil, das zur Stabilisierung bzw. Festigkeit des Rotorblatts beiträgt und als wesentlicher Bestandteil tragende Funktion hat, zunächst in der Fertigung des Rotorblatts geteilt sein kann und durch entsprechende Verbindung der Teile der tragenden Struktur, insbesondere Verklebung, eine immer noch ausreichende Stabilität bzw. vorzugsweise sogar eine erhöhte Stabilität erzeugt wird.

Die Längserstreckung, die sich von einer Rotorblattwurzel im Wesentlichen zu einer Rotorblattspitze erstreckt, bedeutet insbesondere, dass die Längserstreckung nicht notwendigerweise genau zur Rotorblattspitze vorliegen muss; sie kann auch in einem Winkel versetzt angeordnet sein, so dass die Längserstreckung von der Rotorblattwurzel in einem Winkel zu einer Längserstreckung, die zur Rotorblattspitze ginge, liegt. Der Winkel kann hierbei beispielsweise zwischen - 5° und 5° liegen. Der Winkel kann auch so groß sein, dass bei einer Rotorblattfertigung, bei der eine vorgefertigte Rotorblattspitze mit einer Erstreckung in Längsrichtung von bis zu 5 m an das restliche Teilblatt angebracht wird, beispielsweise die Längserstreckung zur Hinterkante oder Vorderkante an der Nahtstelle zur Fügekante des Teilblattes zur Rotorblattspitze liegen kann. Besonders bevorzugt ist, wenn in Längserstreckung von der Rotorblattwurzel zur Rotorblattspitze eine Verschiebung zur Vorderkante oder Hinterkante des Rotorblatts von 200 mm bis 300 mm von der Rotorblattspitze vorgesehen ist, so dass sich ein entsprechender Winkel der Längserstreckung zu einer gedachten Längserstreckung von der Rotorblattwurzel zur Rotorblattspitze ergibt.

Vorzugsweise weist der I -Träger einen Steg auf, der sich innerhalb des Rotorblatts von der Druckseite zur Saugseite erstreckt und außerdem einen Gurt an der Druckseite sowie einen Gurt an der Saugseite. Der Gurt ist hierbei vorzugsweise innerhalb des Rotorblatts eingebracht und mit einer außen liegenden Verschalung verbunden.

Bei diesem I -Träger umfasst der Steg Stegfüße, die mit dem Steg eine Form einer eckigen Klammer oder eine Form eines Z ausbilden.

Eine besonders einfache und effiziente Fertigung ist gegeben, wenn der I-Träger in Längserstreckung geteilt ist. Vorzugsweise sind die I-Trägerteile miteinander verbunden, insbesondere verklebt. Erfindungsgemäß weist der I-Träger I-Trägerteile auf, die einen Steg umfassen, wobei der I-Träger in Längserstreckung und flächig in einer Ebene, die durch den Steg definiert ist, geteilt ist. Der Steg ist hierbei ein im Wesentlichen flächiges Bauelement, wobei die Ebene der Teilung mitten durch den Steg hindurchgeht, und zwar im Wesentlichen parallel zu den Seitenflächen des Stegs. Durch die Verklebung, die insbesondere auch unter Zuhilfenahme von Glasfasern geschehen kann und beispielsweise mit einer Kunststofftechnik unter Verwendung wenigstens eines Harzes und wenigstens einer Faserlage, insbesondere Glasfasern und/oder Kohlefasern und/oder Aramidfasern geschieht, kann ein Verkleben, beispielsweise mit einer Spritz-Press-Technik, einer Infusionstechnik oder eine vakuumunterstützten Infusionstechnik geschehen.

Vorzugsweise werden die beabstandeten Gurte auf der Saugseite und/oder auf der Druckseite durch Verklebung mit jeweils einem Stegfuß des Steges verbunden. Der Stegfuß hat dann eine entsprechende Erstreckung in Sehnenrichtung zwischen Profilvorderkante und Profilhinterkante bzw. eine annähernd tangentiale Erstreckung zu dem Profil im Bereich des Stegs, die eine ausreichende feste bzw. stabile Verbindung der Gurte sowohl auf der Druckseite als auch auf der Saugseite ermöglichen.

Vorzugsweise ist das Rotorblatt insbesondere während der Herstellung zusätzlich an der Profilvorderkante und/oder der Profilhinterkante geteilt. Hierdurch ergibt sich eine noch einfachere und genauere Fertigungsmöglichkeit des Rotorblatts. Zu einem entsprechenden Fertigungsverfahren und einer entsprechenden Fertigungsform, die dieses ermöglicht, wird vollumfänglich auf die Patentanmeldung der Patentanmelderin vom 12.08.2008 mit dem Titel "Verfahren und Fertigungsform zur Fertigung eines Rotorblatts für eine Windenergieanlage", mit dem Aktenzeichen DE 10 2008 038 620.0 verwiesen.

Bei dem Rotorblatt der Windenergieanlage ist ein in Längserstreckung des Rotorblatts geteilter Gurt vorgesehen, dessen Gurtteile einen Abstand zueinander haben, der kleiner als die Erstreckung eines Gurtteils in Richtung von der Profilvorderkante zu der Profilhinterkante ist. Der Abstand der Gurte in Sehnenrichtung des Profils ist somit kleiner als die Breite eines Gurtteils ist.

Der geteilte Gurt hat hierbei im Wesentlichen die Kontur des Rotorblatts in dem Bereich, in dem der Gurt im Rotorblatt angeordnet ist, d.h., der geteilte Gurt ist entsprechend in längsaxialer Richtung gekrümmt und verwunden, wobei die Verwindung insbesondere eine Art Verwringung um die Längsachse bzw. um die Längserstreckung darstellt und die Krümmung insbesondere eine Art Verbiegung des Rotorblatts zur Längsachse ist. Der geteilte Gurt ist somit entsprechend vorzugsweise "geflext" und "getwistet".

Die Teilung des Gurts ist insbesondere so zu verstehen, dass von der Rotorblattvorderkante zur Rotorblatthinterkante eine entsprechende Beabstandung vorgesehen ist. Der geteilte Gurt wird als zwei nebeneinander angeordnete Gurte verstanden, deren Abstand vergleichsweise gering ist. Bei dem geteilten Gurt handelt es sich somit um zwei nebeneinander angeordnete Gurte, die insbesondere so ausgestaltet sind, dass diese die Belastung eines normalerweise verwendeten einzelnen Gurtes aushalten. Durch Verwendung eines geteilten Gurts bzw. von zwei nebeneinander angeordneten Gurten ist die Fertigungsgenauigkeit von Rotorblättern, die in Längserstreckung aus zwei Teilen bzw. Rotorblattabschnitten bestehen bzw. diese umfassen, besonders hoch.

Vorzugsweise ist der Abstand weniger als ½, insbesondere vorzugsweise weniger als ¼ der Erstreckung eines Gurtteils bzw. eines Gurtes in Richtung von der Profilvorderkante zur Profilhinterkante des Rotorblatts. Der geteilte Gurt ist vorzugsweise im Wesentlichen über die gesamte Längserstreckung des Rotorblatts vorgesehen.

Vorzugsweise ist mit den Gurtteilen ein Steg verbunden, insbesondere geklebt, der sich von der Saugseite zur Druckseite des Rotorblatts erstreckt, so dass der Steg mit den Gurtteilen einen I-Träger bildet. Hierdurch ist ein besonders stabiles Rotorblatt möglich.

Die Aufgabe wird ferner durch ein Verfahren zum Fertigen eines Rotorblatts einer Windenergieanlage gelöst, wobei das gefertigte Rotorblatt in seiner Längserstreckung die sich von einer Rotorblattwurzel im Wesentlichen zu einer Rotorblattspitze erstreckt, wenigstens einen Bereich aufweist, in der das Rotorblatt ein aerodynamisches Querschnittsprofil aufweist, das eine Profilvorderkante (Nase) und eine Profilhinterkante aufweist, die über eine Saugseite und eine Druckseite des Querschnittsprofils verbunden sind, wobei das Verfahren durch die folgenden Verfahrensschritte fortgebildet ist:
- Vorsehen wenigstens zweier in Längsrichtung des Rotorblatts gefertigter und geteilter Rotorblattabschnitte, wobei die Teilung zwischen der Profilvorderkante und der Profilhinterkante angeordnet ist, und wobei das Rotorblatt wenigstens in einen vorderen Rotorblattabschnitt mit der Profilvorderkante und einen hinteren Rotorblattabschnitt mit der Profilhinterkante unterteilt ist,
- Auf- oder Einbringen eines sich im Wesentlichen von der Druckseite zu der Saugseite erstreckenden ersten Stegteils in einen ersten geteilten Rotorblattabschnitt und eines zweiten sich im Wesentlichen von der Druckseite zu der Saugseite erstreckenden zweiten Stegteils in einen zweiten geteilten Rotorblattabschnitt und
- Verbinden, insbesondere Verkleben, des ersten Stegteils mit dem zweiten Stegteil, so dass sich ein Doppelsteg bildet,
- wobei das Auf- oder Einbringen des ersten und des zweiten Stegteils ein Verbinden, insbesondere Ankleben, des ersten und zweiten Stegteils an jeweils einen Gurt an der Druckseite und einen Gurt an der Saugseite je Rotorblattabschnitt umfasst, wobei durch das Verbinden, insbesondere Verkleben, des ersten, insbesondere eckige Klammer förmigen, Stegteils mit dem zweiten, insbesondere eckige Klammer förmigen, Stegteil sich ein I-Träger bildet, umfassend wenigstens vier Gurte und einen Doppelsteg.

Durch Herstellen eines Doppelstegs wird die Stabilität des Stegs schon erhöht. Das Auf- oder Einbringen eines sich im Wesentlichen von der Druckseite zur Saugseite erstreckenden ersten Stegteils in einen ersten geteilten Rotorblattabschnitt und einen zweiten sich im Wesentlichen von der Druckseite zur Saugseite erstreckenden Stegteils in einen zweiten geteilten Rotorblattabschnitt beinhaltet das Auf- oder Einbringen dieser jeweiligen Stegteile ins Innere der Rotorblattabschnitte, so dass diese an die Innenwandung der Rotorblattabschnitte bzw. eines dort angeordneten Gurtes angebracht werden. Unter Auf- oder Einbringen wird auch Anbringen verstanden.

Durch die Erfindung ist es besonders einfach, die beiden Rotorblattabschnitte miteinander zu verbinden, so dass sich eine sehr stabile Struktur ergibt.

Erfindungsgemäß ist ferner ein Verfahren zum Fertigen eines Rotorblatts einer Windenergieanlage vorgesehen, wobei das gefertigte Rotorblatt in seiner Längserstreckung, die sich von einer Rotorblattwurzel im Wesentlichen zu einer Rotorblattspitze erstreckt, wenigstens einen Bereich aufweist, in der das Rotorblatt ein aerodynamisches Querschnittsprofil aufweist, das eine Profilvorderkante (Nase) und eine Profilhinterkante aufweist, die über eine Saugseite und eine Druckseite des Querschnittsprofils verbunden sind, wobei das Verfahren durch die folgenden Verfahrensschritte fortgebildet ist:
- Vorsehen wenigstens zweier in Längsrichtung des Rotorblatts gefertigter und geteilter Rotorblattabschnitte, wobei die Teilung zwischen der Profilvorderkante und der Profilhinterkante angeordnet ist, und wobei das Rotorblatt wenigstens in einen vorderen Rotorblattabschnitt mit der Profilvorderkante und einen hinteren Rotorblattabschnitt mit der Profilhinterkante unterteilt ist,
- Auf- oder Einbringen eines sich im Wesentlichen von der Druckseite zu der Saugseite erstreckenden Stegs, der wenigstens zwei Stegfüße aufweist, in einen ersten geteilten Rotorblattabschnitt, so dass ein Teil der Stegfüße aus dem Rotorblattabschnitt herausragt,
- Verkleben der herausragenden Teile der Stegfüße mit einem zweiten geteilten Rotorblattabschnitt, wobei
- sich durch das Verkleben des Stegs mit den Rotorblattabschnitten ein I-Träger, umfassend vier Gurte und den Stegbildet.

Unter dem Begriff Auf- oder Einbringung kann auch ein Anbringen zu verstehen sein.

Bei der Herstellung des Rotorblatts können vorzugsweise ein Rotorblattspitzenbereich und/oder eine Rotorblattwurzel als vorgefertigter Einsatz vorgesehen sein, die jeweils in Längserstreckung nicht notwendigerweise geteilt sein müssen. Die Längserstreckung dieser vorgefertigten Einsatzteile kann sich von wenigen Zentimetern bis zu 5 m erstrecken.

Vorzugsweise werden zum Vorsehen von zwei in Längserstreckung des Rotorblatts gefertigter und geteilter Rotorblattabschnitte wenigstens bei einem Rotorblattabschnitt ein Saugseitenabschnitt und ein Druckseitenabschnitt miteinander verbunden, insbesondere verklebt.

Vorzugsweise bilden die beiden Rotorblattabschnitte einen Nasenkasten und/oder einen Endkasten eines Rotorblatts.

Vorzugsweise wird zum Vorsehen von zwei in Längserstreckung des Rotorblatts gefertigter und geteilter Rotorblattabschnitte jeweils ein Gurt mit einer Saugseite und einer Druckseite jedes Rotorblattabschnitts verbunden, insbesondere verklebt.

Das erfindungsgemäße Verfahren und die Weiterbildungen des erfindungsgemäßen Verfahrens werden vorzugsweise in einer dafür vorgesehenen Fügevorrichtung durchgeführt, die ausgebildet ist, um mit entsprechenden Haltevorrichtungen die Rotorblattabschnitte bzw. Saugseitenabschnitte und Druckseitenabschnitte als auch Stege und ähnliches zu halten. Alternativ können diese Komponenten auch wenigstens zum Teil noch in einer Fertigungsform angeordnet bzw. gehalten sein. Eine entsprechende Fertigungsform ist in der oben genannten deutschen Patentanmeldung DE 10 2008 038 620.0 offenbart.

Die Aufgabe wird ferner durch ein Verfahren zum Herstellen eines Gurtpaares eines erfindungsgemäßen Rotorblatts gelöst, wo-bei das Gurtpaar in einer Fertigungsform hergestellt wird, die die Kontur des Rotorblattes im Bereich des Gurtpaares aufweist und sich wenigstens über die Länge eines Abschnitts des Rotorblatts, insbesondere in Längserstreckung, erstreckt.

Hierdurch ist es möglich, sehr präzise ein Gurtpaar zur Verwendung in einem Rotorblatt herzustellen, das zum einen auf der Saugseite und/oder auf der Druckseite des Rotorblatts angeordnet ist und insbesondere dazu dient, Schalensegmente bzw. Rotorblattabschnitte oder Saugseiten- und Druckseitenabschnitte mit dem Gurtpaar zu verbinden, so dass eine sehr genaue Fertigung eines damit gefertigten Rotorblattes möglich ist. Insbesondere kann beim Einhalten eines vorzugsweise konstanten Abstandes zwischen dem Gurtpaar über die Länge des Abschnitts, insbesondere des aerodynamischen Bereichs, des Rotorblatts und vorzugsweise von der Blattwurzel bis zur Blattspitze oder im Wesentlichen von der Blattwurzel bis im Wesentlichen zur Blattspitze eine sehr hohe Fügegenauigkeit bzw. Verbindungsgenauigkeit gegeben sein.

Vorzugsweise erstreckt sich der Abschnitt von einem Bereich in der Nähe der Rotorblattwurzel bis zur Rotorblattspitze oder bis zu einem Abschnittsende des Rotorblatts in der Nähe der Rotorblattspitze.

Hierbei ist insbesondere in der letzten Variante mit der Erstreckung bis zu einem Abschnittsende des Rotorblatts in der Nähe der Rotorblattspitze eine Fertigung des Rotorblatts vorgesehen, bei dem eine vorgefertigte Rotorblattspitze an einem längserstreckt geteilten Rotorblattabschnitt angebracht wird. Hierzu ist dann das Gurtpaar entsprechend der Abschnittslänge der geteilten Rotorblattabschnitte, und zwar in Längserstreckung geteilter Rotorblattabschnitte angepasst. Der vorgefertigte Rotorblattspitzenabschnitt bzw. die vorgefertigte Rotorblattspitze kann hierbei eine Länge von wenigen Zentimetern bis zu mehreren Metern, insbesondere von bis zu 5 m aufweisen.

Vorzugsweise ist ein Zwischensteg, insbesondere Mittelsteg, in der Fertigungsform vorgesehen, der entweder einstückig mit der Fertigungsform als Zwischensteg, insbesondere Mittelsteg, ausgebildet ist oder als ein herausnehmbarer Zwischensteg, insbesondere Mittelsteg, ausgebildet ist. Hierdurch kann sehr genau ein konstanter-Abstand zwischen den Gurtpaaren erzielt werden. Im Rahmen der Erfindung beinhaltet der Begriff "Gurtpaar" auch zwei Gurte, die nebeneinander in einer Fertigungsform hergestellt werden oder auch den Begriff "in längsaxialer Richtung bzw. Längserstreckung des Rotorblatts geteilter Gurt".

Nachfolgend wird die Erfindung anhand von Ausführungsbeispielen ohne Beschränkung des allgemeinen Erfindungsgedankens exemplarisch beschrieben, wobei bezüglich aller im Text nicht näher erläuterten erfindungsgemäßen Einzelheiten ausdrücklich auf die Figuren verwiesen wird. Es zeigen:
- Fig. 1: eine schematische Darstellung eines erfindungsgemäßen Rotorblatts einer Windenergieanlage,
- Fig. 2: eine schematische Darstellung von entsprechenden Komponenten eines Rotorblatts in entsprechenden Fügevorrichtungen in einem ersten Schritt der Fertigung des Rotorblatts,
- Fig. 3: eine schematische Darstellung mit im Vergleich zu Fig. 2 fortgeschrittenem Zustand der Fertigung eines Rotorblatts,
- Fig. 4: eine schematische Darstellung mit im Vergleich zu Fig. 3 fortgeschrittenen Zustand der Rotorblattfertigung,
- Fig. 5: eine schematische Darstellung eines im Vergleich zu Fig. 4 fortgeschrittenen Zustands der Rotorblattfertigung,
- Fig. 6: eine Schnittdarstellung einer erfindungsgemäßen Fertigungsform für die Herstellung eines Gurtpaares,
- Fig. 7: eine schematische Schnittdarstellung einer weiteren erfindungsgemäßen Herstellungsform für die Herstellung eines Gurtpaares,
- Fig. 8: eine schematische Darstellung eines erfindungsgemäßen Rotorblatts einer Windenergieanlage,
- Fig. 9: eine schematische Darstellung der Fertigung eines Rotorblatts in einem fortgeschrittenen Zustand,
- Fig. 10: eine schematische Schnittdarstellung eines Teils eines gefertigten erfindungsgemäßen Rotorblatts,
- Fig. 11: eine schematische Schnittdarstellung eines Teils eines gefertigten erfindungsgemäßen Rotorblatts,

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

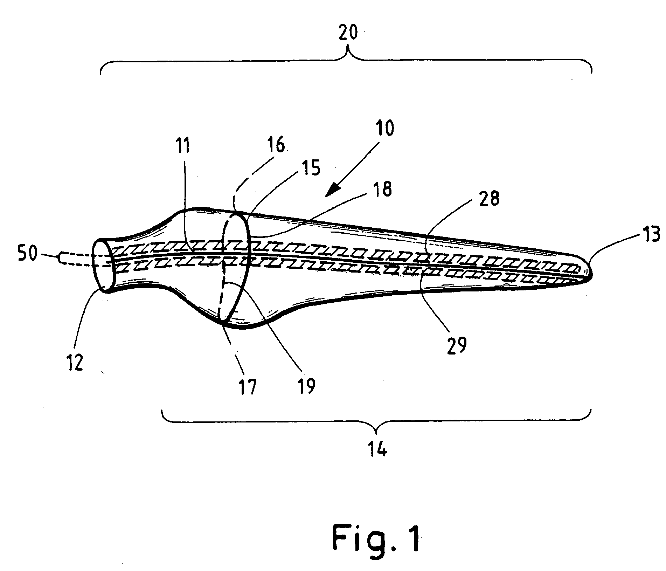

Fig. 1 zeigt schematisch ein erfindungsgemäßes Rotorblatt 10, das eine Längserstreckung 11 von einer Rotorblattwurzel 12 zu einer Rotorblattspitze 13 aufweist. Im Rotorblatt 10 ist ein Querschnittsprofil 15 dargestellt, das aerodynamisch aktiv ist und eine Saügseite 18 sowie eine Druckseite 19 aufweist. Das aerodynamische Querschnittsprofil 15 weist ferner eine Profilvorderkante 16 (Nase) und eine Profilhinterkante 17 auf.

Ferner ist ein Gurtpaar bestehend aus den Gurten 28 und 29 schematisch dargestellt, die einen Abstand 50 voneinander aufweisen und beispielsweise auf der Saugseite 18 angeordnet sind. Die Gurte 28 und 29 sind im Abschnitt 20 vorgesehen, d.h. in diesem Ausführungsbeispiel der Fig. 1 von der Blattwurzel 12 bis zur Rotorblattspitze 13. Nicht dargestellt ist ein entsprechendes Gurtpaar bestehend aus den Gurten 30 und 31 auf der Druckseite 19 des Rotorblatts 10. Es ist auch der aerodynamische Bereich 14 des Rotorblatts 10 angedeutet, der im Wesentlichen für den Auftrieb sorgt. Der Abschnitt 20 kann auch entsprechend kürzer sein, beispielsweise mit einem vorgebbaren ersten Abstand zur Rotorblattspitze 13 enden und/oder mit einem vorgebbaren zweiten Abstand zur Rotorblattwurzel 12. Im Bereich der in Fig. 1 dargestellten Längserstreckung 11 kann das Rotorblatt 10 bei der Herstellung geteilt sein. Ferner kann dieses auch an der Profilvorderkante 16 und der Profilhinterkante 17 geteilt sein.

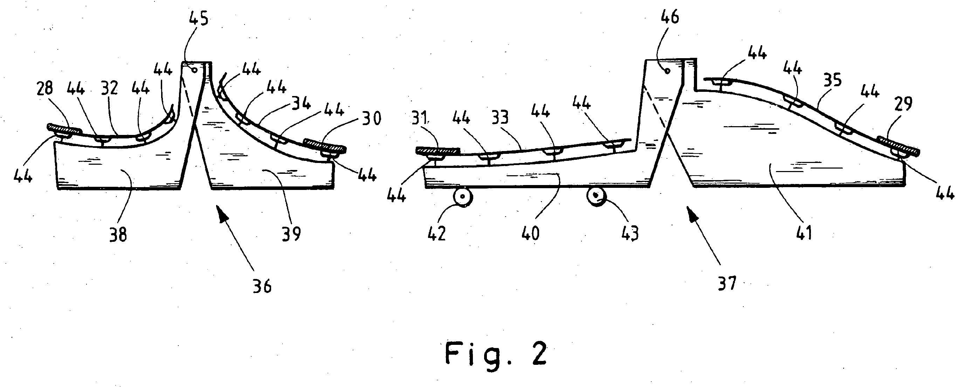

Fig. 2 zeigt eine Einrichtung zum Fertigen eines Rotorblatts 10, wobei zwei Fügevorrichtungen 36 und 37 vorgesehen sind, auf die Schalensegmente 32, 33, 34, 35 eines Rotorblatts 10 gehalten sind. Das Schalensegment 32 entspricht einer Rotorblattschale auf der Druckseite 19 zugehörig zu einem Vorderkasten bzw. einem Nasenkasten 21 und das Schalensegment 34 gehört zur Saugseite 18 des Vorderkastens bzw. des Nasenkastens 21. Es sind entsprechende Gurte 28 und 30 mit den Schalensegmenten 32 und 34 verbunden, insbesondere verklebt. Die Verklebung kann beispielsweise mit einem Harz realisiert sein. Die Schalensegmente 32 und 34 werden mittels einiger Saugelemente 44 unter Sauglufteinfluss in der Fügevorrichtung 36 fixiert. Entsprechend werden die Schalensegmente 33 und 35 durch Saugelemente 44 durch Saugluft in der Fügevorrichtung 37 fixiert.

Das Schalensegment 33 kann zur Saugseite eines Endkastens 23 gehören und das Schalensegment 35 zur Druckseite eines Endkastens 22. Die Schalensegmente 32 bis 35 können beispielsweise aus einem glasfaserverstärkten Gelege mit einem Harz, wie beispielsweise Epoxidharz, hergestellt sein. Die Rotorblattteile sind bevorzugt in einer Kunststofftechnik gefertigt. Vorzugsweise werden bei der Kunststofftechnik wenigstens ein Harz und wenigstens eine Faserlage, insbesondere aus Glasfasern und/oder Kohlefasern und/oder Aramid, wie insbesondere Kevlarfasern, verwendet. Zur Fertigung der Rotorblattschalensegmente 32-35 kann eine Spritz-Press-Technik (Resin Transfer Moulding; RTM) eine Infusionstechnik (Resin Infusion Moulding; RIM) verwendet werden, insbesondere eine durch Vakuum unterstützte Infusionstechnik (Vacuum Assisted Resin Infusion; VAR) und/oder eine Laminiertechnik verwendet werden, beispielsweise mit so genannten Prepregs. Die Fertigung der Rotorblattschalensegmente 32-35 ist in Fig. 2 schon vorher abgeschlossen gewesen, so dass die gefertigten Schalensegmente entsprechend auf die Fügevorrichtungen 36 und 37 aufgebracht bzw. in diese eingebracht werden.

Auch die auf den Schalensegmenten aufgebrachten bzw. mit diesen verbundenen bzw. verklebten Gurte 28-31 können in der Fertigung in einer Fertigungsform schon mit den Schalensegmenten verbunden worden sein.

Die Fügevorrichtungen 36 und 37 weisen jeweils Schwenkachsen 45 und 46 auf, um die die Schwenkteile 38-41 verschwenkt werden können.

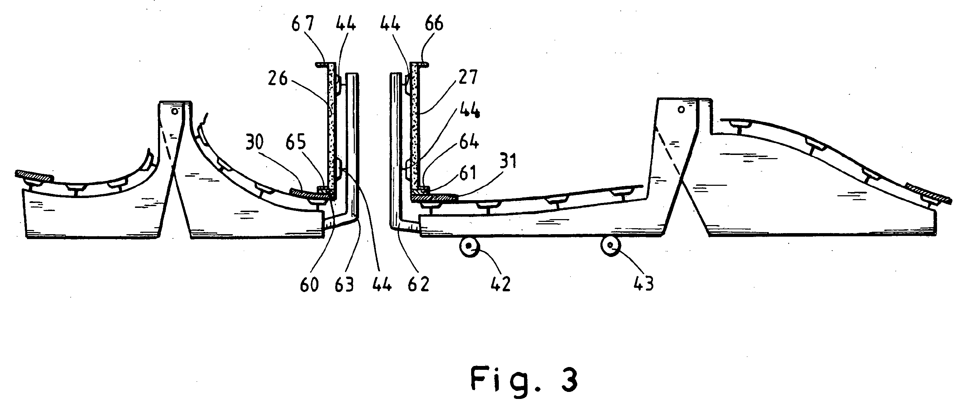

In Fig. 3 ist ein fortgeschrittenes Stadium der Fertigung des erfindungsgemäßen Rotorblatts dargestellt. An einer präzise an das zweite Schwenkteil 39 angebrachten bzw. an diese justierte Positioniervorrichtung 63 ist über Saugelemente 44 ein Stegteil 26 fixiert. Das Stegteil 26 weist zur Saugseite 18 hin einen Stegfuß 65 auf und zur Druckseite 19 hin einen Stegfuß 67. Der Stegfuß 65 ist mittels einer Verklebung 60, beispielsweise aus einem Harz, mit dem Gurt 30 passgenau verklebt. Entsprechend ist eine Positioniervorrichtung 62 mit dem dritten Schwenkteil 40 verbunden oder an diesem justiert. An der Positioniervorrichtung 62 ist über Saugelemente 44 ein Stegteil 27 fixiert. Das Stegteil 27 hat Stegfüße 64 und 66. Der Stegfuß 65 ist über eine Verklebung 61 mit dem Gurt 31 verbunden. Auch hier ist eine passgenaue Justierung des Stegteils 27 mit dem Gurt 31 und dem Schalensegment 33 ermöglicht.

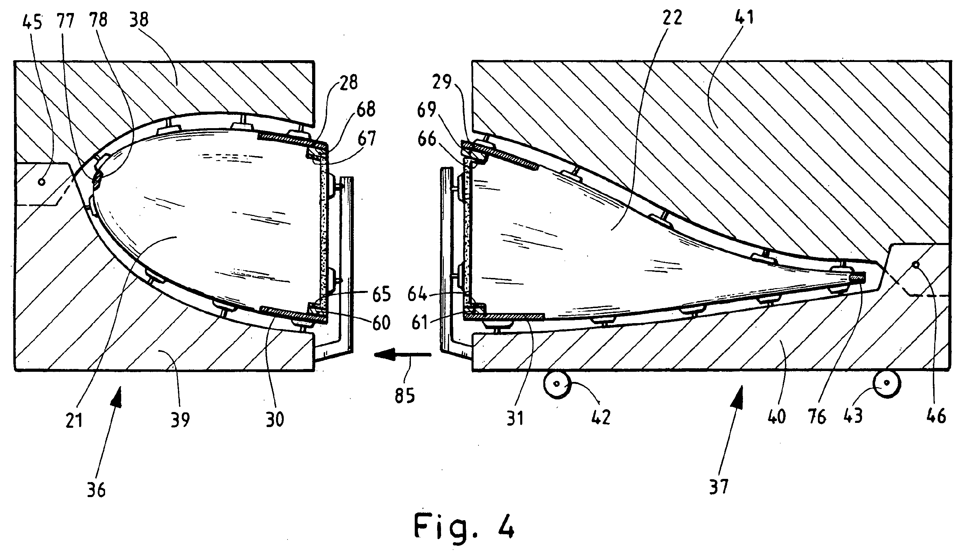

Anschließend wird, wie in Fig. 4 dargestellt ist, das erste Schwenkteil 38 um die Schwenkachse 45 verschwenkt, so dass eine Verklebung 68 des Stegfußes 67 mit dem Gurt 28 erfolgen kann. Auch dieses ist sehr passgenau möglich. Ferner findet eine Verklebung 77 des Schalensegments 32 mit dem Schalensegment 34 über ein mit dem Schalensegment 34 verbundenen Verklebungsteil 78 im Nasenbereich des Nasenkastens 21 statt.

Zur Herstellung eine Endkastens 22 wird das vierte Schwenkteil 41 um die Schwenkachse 46 verschwenkt und der Stegfuß 66 mit einer Verklebung 69 mit dem Gurt 29 verklebt, so dass eine passgenaue Verklebung zwischen dem Steg 27 und dem Gurt 29 bzw. dem Schalensegment 35 erfolgt. Die Hinterkante des Rotorblatts wird auch über eine Verklebung 76 entsprechend verbunden.

Die Fügevorrichtungen 36 und 37 weisen vorzugsweise zusätzlich zu den Schwenkachsen 45 und 46 noch eine nicht dargestellte Linear-Stellvorrichtung auf, mit der die Formteile 38 und 39 bzw. 40 und 41, also die entsprechenden Schwenkteile 38 bis 41 in einer geradlinigen Bewegung geschlossen werden können.

Anschließend wird, wie der Pfeil 85 darstellt, die mit den Rädern 42 und 43 versehene Fügevorrichtung 37 in Richtung der Fügevorrichtung 36 verfahren, und zwar nach einem Abbinden der Verklebungen 60, 68, 77, 61, 69 und 76 und nach einem Entfernen der Positioniervorrichtungen 62 und 63.

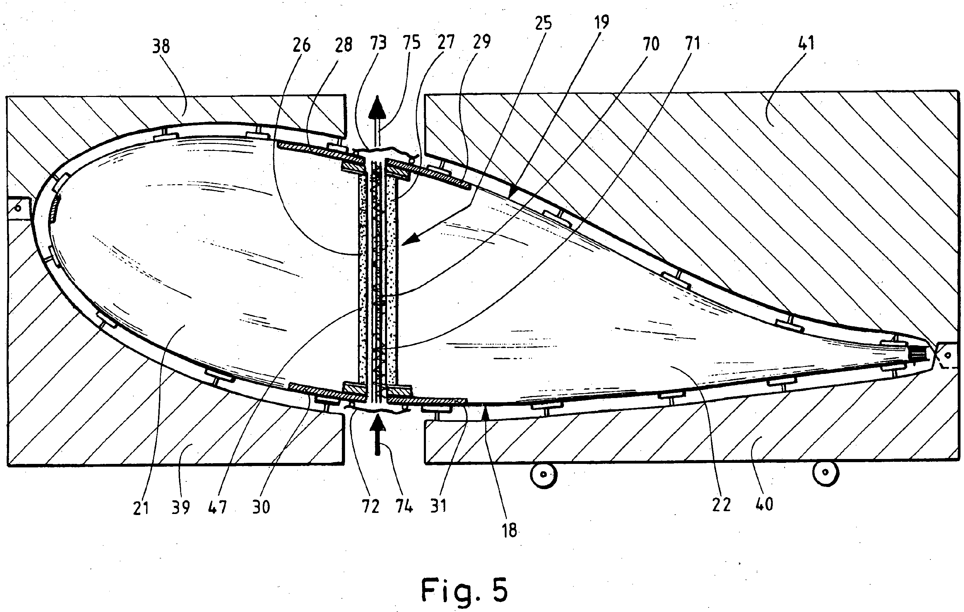

Es ergibt sich, wie in Fig. 5 schematisch dargestellt ist, ein Klebespalt zwischen den Stegteilen 26 und 27. In diesem ist ein Fließmedium, beispielsweise ein Glasfasergewirr 70, vorgesehen. Hierbei kann es sich um eine oder mehrere Lagen Glaswirrfasermatte (Continuous Mat), Glasgelege, Glasgewebe oder ein in Dickenrichtung kompressibles Gespinn handeln. Der Klebespalt wird vorzugsweise rundum vakuumdicht abgedichtet. Hierzu sind Abdichtungen 72 und 73 vorgesehen, die als Vakuumfolie oder als eine feste Dichtfläche realisiert sein kann. Angedeutet sind auch entsprechende Dichtgummis, die kein Bezugszeichen aufweisen.

Am unteren Ende des Klebespalts ist ein Harzanguss 74 angedeutet und am oberen Ende ein Vakuumanschluss 75. Beim Anlegen von Unterdruck bzw. Vakuum wird durch den Anguss ein Klebemedium in Form von beispielsweise Harz 71 in den Klebespalt hineingesaugt, so dass der Spalt vollständig gefüllt wird. Hierdurch ergibt sich aus Vorder- und Hintersteg bzw. den Stegteilen 26 und 27 ein Steg, der auch als Mittelsteg bezeichnet werden kann, der sich in der Mitte der Gurte 28, 29 und 30, 31 befindet. Erkennbar haben die Gurte 28 und 29 einen Abstand zueinander und die Gurte 30 und 31 einen entsprechenden Abstand zueinander. Das Klebemedium kann ein Infusionsharz oder ein niedrig viskoses Klebeharz sein. Die Anordnung von Anguss 74 bzw. Harzanguss 74 und Vakuumanschluss 75 kann auch vertauscht werden.

Über die Längserstreckung des Rotorblatts 10 werden unter Umständen mehrere Angüsse nötig. Entsprechend können auch mehrere Vakuumanschlüsse vorgesehen sein. Insbesondere wenn die Blattlänge relativ lang ist, beispielsweise um die 60m.

Die Anordnung des Rotorblatts 10 bzw. der Rotorblattschalensegmente 32-35 mit den Saugseitenelementen nach unten ist nicht zwingend notwendig. Diese kann auch anders herum positioniert sein.

Nach dem Harzanguss kann für eine aerodynamisch sinnvolle Verbindung und zum Schließen der Lücke zwischen den Gurtteilen bzw. Gurtpaaren 28, 29 und 30, 31 diese Lücke entsprechend mit einem Harz und ggf. auch mit einem Glasfasergewirr oder ähnlichem bündig verschlossen werden.

Die Stegteile 26 und 27 können beispielsweise aus biaxialem Gelege, d.h. aus Glasfaser- oder Kohlefaser- bzw. Aramidfasergelege sein oder diese umfassen. Die Gelege haben Orientierungen von ± 20° bis ± 50° und liegen insbesondere in einem Bereich von ± 30° bis ± 45°. Zur Innenseite, also zum Glasfasergewirr 70, kann eine Lage Gelege, insbesondere biaxiales Gelege, vorgesehen sein und an der Außenfläche beispielsweise vier Lagen biaxiales Gewebe im Bereich der Rotorblattwurzel 12 vorgesehen sein und eine Lage biaxiales Gelege im Bereich der Rotorblattspitze 13. Der Abstand der Stegteile 26 und 27 liegt bevorzugt in einem Bereich zwischen 1 mm und 20mm, insbesondere bevorzugt zwischen 2mm und 3mm.

Um eine ausreichende Beulfestigkeit des hergestellten Rotorblattes 10 zu erreichen, kann das Blatt zusätzlich einen Hinterkantensteg außerhalb des Bereichs des I-Trägers 25, der sich durch die Verklebung der Stegteile 26, 27 mit den Gurten 28, 29 und 30, 31 ergibt, aufweisen. Der Hinterkantensteg ist vorzugsweise im Endkasten 22 angeordnet und kann dort auf der Saugseite und/oder der Druckseite angeordnet sein und reicht beispielsweise bei einem 61m-Blatt von ca. 8m bis 52m gerechnet von der Rotorblattwurzel 12.

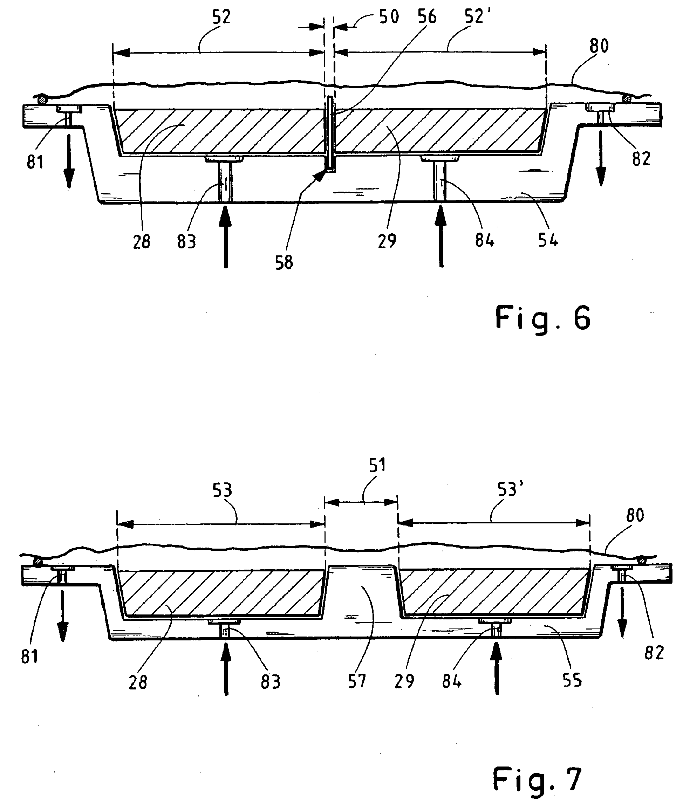

Die Fügevorrichtung 36, 37 wird bevorzugt verwendet, da so die Belegungszeit der Rotorblattherstellungsform reduziert wird. Die vier Schalensegmente 32 bis 35 werden entsprechend in den Schwenkteilen 38 bis 41 justiert. Die Verklebung der Stegteile 26 und 27 erfolgt insbesondere flächig. Die besonders genaue Positionierung und Justierung der Schalensegmente 32 bis 35 und der Stegteile 26 und 27 erfolgt vorzugsweise durch die in Fig. 1 bis 5 angedeuteten Positioniervorrichtung, die als Saugelemente 44 dargestellt sind und vorzugsweise in deren Höhe bzw. Beabstandung zu den Schwenkteilen verstellbar sind. Die sehr große Formgenauigkeit wird dadurch erzielt, dass die Gurte bzw. Gurtteile 28, 29 und 30, 31 jeweils zusammen, also die Gurte 28 und 29 zusammen und die Gurte 30 und 31 zusammen in einer Fertigungsform hergestellt werden. Hierzu sind in den Figuren 6 und 7 schematische Schnittdarstellungen entsprechender Fertigungsformen, in denen die entsprechenden Gurte 28 und 29, die hier als Beispiel dienen, gefertigt werden, dargestellt.

In den Fertigungsformen 54 und 55 sind entsprechend jeweils zwei Kavitäten für die herzustellenden Gurte 28 und 29 vorgesehen, die in der Mitte getrennt sind. Im Ausführungsbeispiel gemäß Fig. 6 geschieht die Trennung durch einen in einer Aussparung 58 einbringbaren Mittelsteg 56 und in der Ausführungsform gemäß Fig. 7 durch einen einstückig mit der Fertigungsform 55 gefertigten Mittelsteg 57.

Es werden trockene Glasfasern in die Form eingelegt und durch einen Harzanguss 74 in den Kavitäten mit einem Harz 71 getränkt. Durch die formfeste Trennung bzw. die Fertigung der beiden Gurte 28 und 29 in einer einzigen Form passen die beiden Gurte 28 und 29 immer perfekt zueinander. Beide Gurte weisen eine identische Krümmung und Verwindung auf, die dem zu fertigenden Rotorblatt 10 im Bereich der jeweiligen Gurte entspricht. Die Fertigung der Gurte 28 und 29 geschieht in den Ausführungsbeispielen gemäß Fig. 6 und Fig. 7 vorzugsweise mit einer vakuumunterstützen Infusionstechnik, wofür Harzangussanschlüsse 83 und 84 vorgesehen sind und Vakuumanschlüsse 81 und 82. Zur Abdichtung ist eine Vakuumfolie 80 vorgesehen, die links und rechts in den Figuren 6 und 7 mit Dichtleisten, die kein Bezugszeichen aufweisen und beispielsweise als Gummilippen ausgebildet sein können, mit den Fertigungsformen 54 bzw. 55 verbunden sind. Der Gurt 28 hat nach der Fertigung eine Erstreckung 52 und der Gurt 29 eine Erstreckung 52' gemäß der Ausführungsform gemäß Fig. 6 und bei Fig. 7 hat der Gurt 28 eine Erstreckung 53 und der Gurt 29 eine Erstreckung 53'. Entsprechend ist der Abstand 50 bei der Verwendung eines Mittelstegs 56 gemäß Fig. 6 kleiner als bei einem Mittelsteg 51 gemäß Fig. 7, da der Mittelsteg 51 in Fig. 7 angeschrägt bzw. gefast ist.

Bei der Ausführungsform gemäß Fig. 6 werden beide Gurte 28,29 gemeinsam aus der Fertigungsform 54 entformt und anschließend die Trennleiste entfernt. Hierdurch können kleinere Ausrichtfehler der Trennleiste entstehen, die allerdings belanglos sind, da die beiden Gurthälften stets komplementär, also im Wesentlichen gleichförmig, ausgebildet sind. Die Ausführungsform gemäß Fig. 7 ermöglicht geringere Toleranzen der Gurte 28, 29 bzw. eine geringere Toleranz bzw. Unterschiede im Abstand 51 in Längserstreckung des Rotorblattes, führt aber zu größeren Abständen 51 und damit zu größeren Klebespalten zwischen den Stegteilen 25 und 26 in Fig. 5. Der Abstand der Stegteile 25 und 26 kann dann im Bereich von 10mm oder mehr liegen.

Die gemeinsame Fertigung von zwei Gurten in einer Fertigungsform spart Fertigungsplatz und Zeit bei der Fertigung. Außerdem können so hergestellte Gurte, die in Längserstreckung des Rotorblattes dann an einer Druckseite oder einer Saugseite jeweils verwendet werden, auch anstelle eines Steges, der die Gurte verbindet und der in der Mitte verklebt ist, also eines Doppelsteges, beispielsweise bei einer Verbindung mittels eines Kastenholmes gemäß der Patentanmeldung DE 10 2008 038 620.0 verwendet werden.

Durch die Erfindung ist eine kontrollierbare, prozesssichere und zugängliche Steg-zu-Schalen-Verklebung möglich. Durch eine großflächige Mittelstegverklebung bzw. Stegverklebung, durch die sich ein I-Träger bildet, können hohe Kräfte übertragen werden. Es ist ferner nicht nötig, einen externen Anpressdruck zum Verdrängen des Klebers zu verwenden, da die Stegteile 26 und 27 durch das angelegte Vakuum aufeinander gepresst werden. Die Stegteile an sich sind zugbelastbar, allerdings in sich relativ weich. Lokale Dickenunterschiede des Klebespaltes, also des Spaltes zwischen den Stegteilen 26 und 27, die durch Toleranzen der Klebeflächen bzw. der Stegflächen entstehen, werden durch das Vakuum auf die Dicke des Fließmediums nivelliert. Das Fließmedium stellt außerdem den Harzfluss durch die aufeinander gepressten Flächen sicher. Dieses ist am gefertigten Blatt nicht sichtbar.

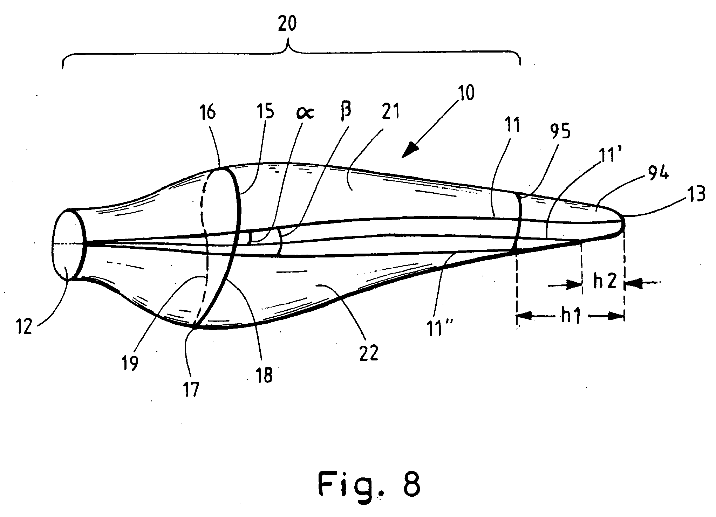

Fig. 8 zeigt ein schematisch dargestelltes erfindungsgemäßes Rotorblatt 10. Bei diesem Rotorblatt ist eine Längsteilung des Rotorblatts 10 in Rotorblattabschnitte 21 und 22 vorgesehen, wobei die Teilung entlang einer Längserstreckung 11 bzw. 11' oder 11" erfolgt. Die Längserstreckung 11 geht von der Rotorblattwurzel zur Rotorblattspitze 13. Die Längserstreckung 11' verläuft von der Rotorblattwurzel im Wesentlichen zur Rotorblattspitze 13 und endet im Bereich der Rotorblattspitze 13 in einem Abstand h2 von dieser Spitze. Entsprechend kann bei einer Teilung in Längserstreckung 11" diese bis zu einer Kante im Bereich der Rotorblattspitze 13 gehen, die eine Verbindungskante 95 zwischen einer vorgefertigten Rotorblattspitze und dem restlichen Rotorblatt bzw. Rotorblattabschnitt 20 darstellt. Die Rotorblattspitze muss in diesem Fall beispielsweise nicht in Längserstreckung geteilt sein.

Der Abstand zur Verbindungskante 95 ist mit h1 angegeben. Dieser kann bis zu 5 m sein. Es kann allerdings auch ein Abstand von wenigen Zentimetern vorgesehen sein. Der Rotorblattspitzenabschnitt 94 kann, wie gesagt, gesondert vorgefertigt werden. Entsprechend sind zwischen der Längserstreckung 11 zwischen der Rotorblattwurzel 12 und der Rotorblattspitze 13 Winkel α und β zur Längserstreckung 11' bzw. Längserstreckung 11" vorgesehen α kann beispielsweise im Bereich von 0,1 bis 2° liegen und β im Bereich von 2° bis 5°.

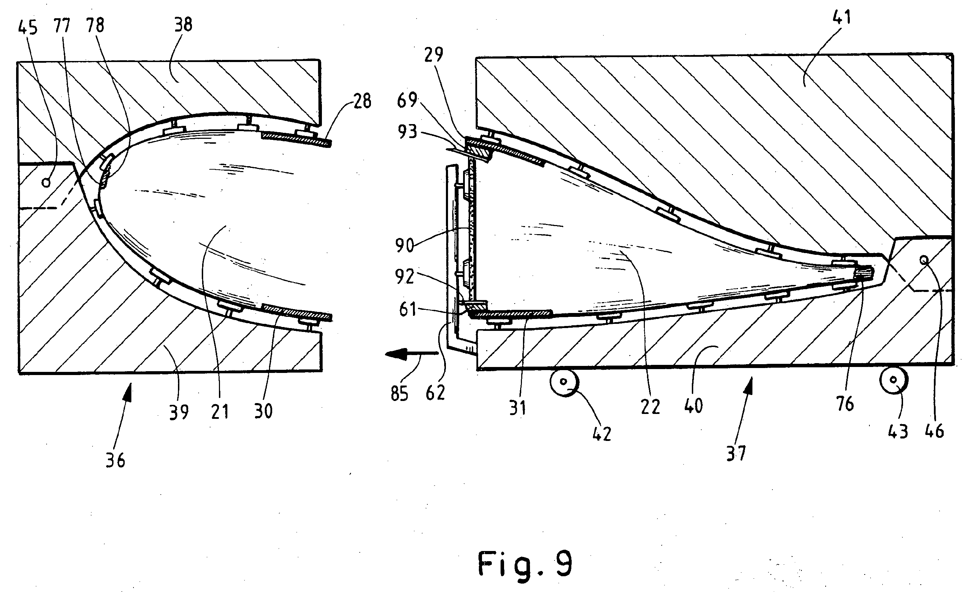

Fig. 9 zeigt eine schematische Schnittdarstellung durch die Fertigungsvorrichtung, in der entsprechende Rotorblattabschnitte schon eingebracht sind, wobei in diesem Fall in dem hinteren Rotorblattabschnitt 22, also im Endkasten, ein Steg 90 eingeklebt ist, der Stegfüße 92 und 93 aufweist, die jeweils nach links und rechts überragen und mit entsprechenden Verklebungen 69 und 61 an den Gurten 29 und 31 angeklebt sind. Die überstehenden Teile der Stegfüße 92 und 93 werden dann nach dem Entfernen der Positioniervorrichtung 62 und dem Zusammenschieben der Rotorblattabschnitte in Pfeilrichtung 85 an die Gurte 28 und 30 angeklebt.

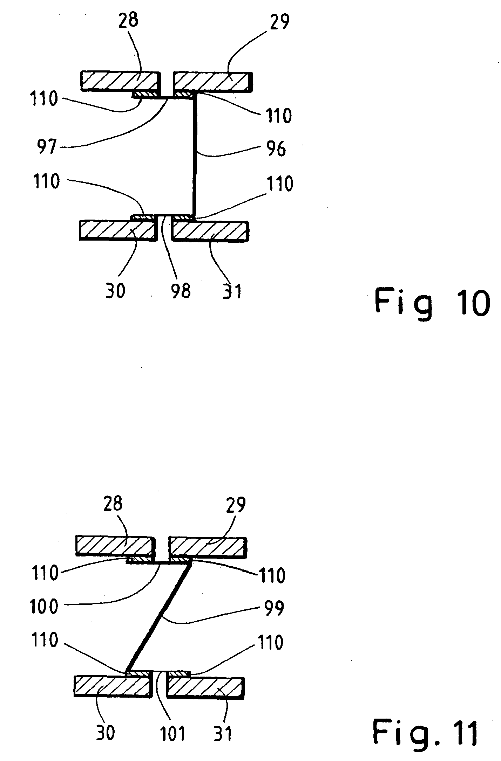

Fig. 10 und Fig. 11 zeigen weitere schematische Querschnittsdarstellungen von Verbindungsmöglichkeiten der Rotorblattabschnitte, die hier nicht dargestellt sind. Dargestellt sind allerdings die Gurte 29 bis 31, die mit entsprechenden Verklebungen 110 an den jeweiligen Stegfüßen 97 und 98 eines Stegs 96 angeklebt sind. Der Steg 96 hat die Form einer eckigen Klammer bzw. eines eckigen C. Die Stegfüße 97 und 98 ragen über den Abstand der Gurte 28 und 29 bzw. 30 und 31 über.

Entsprechend ist in Fig. 11 eine Verbindung dargestellt, bei der ein Steg 99 vorgesehen ist, der Z-förmig ist. Entsprechend sind die Stegfüße 100 und 101 mit den Gurten 28 und 29 bzw. 30 und 31 durch Verklebungen 110 verklebt.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezupszeichenliste

- 10: Rotorblatt
- 11, 11', 11": Längserstreckung
- 12: Rotorblattwurzel
- 13: Rotorblattspitze
- 14: aerodynamischer Bereich
- 15: Querschnittsprofil
- 16: Profilvorderkante
- 17: Profilhinterkante
- 18: Saugseite
- 19: Druckseite
- 20: Abschnitt
- 21: Nasenkasten
- 22: Endkasten
- 23: hinterer Bereich
- 24: vorderer Bereich
- 25: I-Träger
- 26: Stegteil
- 27: Stegteil
- 28: Gurt
- 29: Gurt
- 30: Gurt
- 31: Gurt
- 32: Schalensegment
- 33: Schalensegment
- 34: Schalensegment
- 35: Schalensegment
- 36: Fügevorrichtung
- 37: Fügevorrichtung
- 38: erstes Schwenkteil
- 39: zweites Schwenkteil
- 40: drittes Schwenkteil
- 41: viertes Schwenkteil
- 42: Rad
- 43: Rad
- 44: Saugelement
- 45: Schwenkachse
- 46: Schwenkachse
- 47: Doppelsteg
- 50: Abstand
- 51: Abstand
- 52, 52': Erstreckung
- 53, 53': Erstreckung
- 54: Fertigungsform
- 55: Fertigungsform
- 56: Mittelsteg
- 57: Mittelsteg
- 58: Aussparung
- 60: Verklebung
- 61: Verklebung
- 62: Positioniervorrichtung
- 63: Positioniervorrichtung
- 64-67: Stegfuß
- 68: Verklebung
- 69: Verklebung
- 70: Glasfasergewirr
- 71: Harz
- 72: Abdichtung
- 73: Abdichtung
- 74: Harzanguss
- 75: Vakuumanschluss
- 76: Verklebung
- 77: Verklebung
- 78: Verklebungsteil
- 80: Vakuumfolie
- 81: Vakuumanschluss
- 82: Vakuumanschluss
- 83: Harzangussanschluss
- 84: Harzangussanschluss
- 85: Pfeil
- 90: Steg
- 91: Steg
- 92: Stegfuß
- 93: Stegfuß
- 94: Rotorblattspitzenabschnitt
- 95: Verbindungskante
- 96: Steg
- 97: Stegfuß
- 98: Stegfuß
- 99: Steg
- 100: Stegfuß
- 101: Stegfuß
- 110: Verklebung
- h1: Abstand
- h2: Abstand
- α: Winkel
- β: Winkel

## Patentansprüche

1. Rotorblatt (10) einer Windenergieanlage, wobei das Rotorblatt (10) eine Längserstreckung (11) aufweist, die sich von einer Rotorblattwurzel (12) im Wesentlichen zu einer Rotorblattspitze (13) erstreckt, wobei wenigstens in einem Bereich des Rotorblatts (10) ein aerodynamisches Querschnittsprofil (15) vorgesehen ist, das eine Profilvorderkante (16) (Nase) und eine Profilhinterkante (17) aufweist, die über eine Saugseite (18) und eine Druckseite (19) des Querschnittsprofils (15) verbunden sind, **dadurch gekennzeichnet, dass** das Rotorblatt (10) wenigstens in einem längserstreckten Abschnitt (20) in einen vorderen Rotorblattabschnitt (21) mit der Profilvorderkante (16) und einen hinteren Rotorblattabschnitt (22) mit der Profilhinterkante (17) unterteilt ist, wobei der hintere Bereich (23) des vorderen Rotorblattabschnitts (21) und der angrenzende Vorderbereich (24) des hinteren Rotorblattabschnitts (22) durch einen I-Träger (25) verbunden sind, wobei der I-Träger (25) I-Trägerteile (26-31) aufweist, die einen Steg (26, 27, 90, 91, 96, 99) umfassen, wobei der I-Träger (25) in Längserstreckung und flächig in einer Ebene, die durch den Steg (26, 27, 90, 91, 96, 99) definiert ist, geteilt ist, wobei zur Saugseite (18) und zur Druckseite (19) hin jeweils zwei Gurte (28-31) den I-Träger (25) abschließen, die einen Abstand voneinander aufweisen, der kleiner als die Erstreckung der Gurte (28-31) in Richtung von der Profilvorderkante (16) zur Profilhinterkante (17) ist.

2. Rotorblatt (10) nach Anspruch 1, **dadurch gekennzeichnet, dass** der I-Träger (25) einen Steg (26, 27, 90, 91, 96, 99), der sich innerhalb des Rotorblatts (10) von der Druckseite (19) zur Saugseite (18) erstreckt, und einen Gurt (28, 29) an der Druckseite (19) sowie einen Gurt (30, 31) an der Saugseite (18) aufweist, wobei der Steg (26, 27, 90, 91, 96, 99) Stegfüße (64-67, 92, 93, 97, 98, 100, 101) umfasst, die mit dem Steg (26, 27, 90, 91, 96, 99) eine Form einer eckigen Klammer (], [) oder eine Form eines Z ausbilden.

3. Rotorblatt (10) nach Anspruch 1 oder 2, **dadurch gekennzeichnet, dass** die I-Trägerteile (26, 27) miteinander verbunden, insbesondere verklebt, sind.

4. Rotorblatt (10) nach einem der Ansprüche 1 bis 3, **dadurch gekennzeichnet, dass** das Rotorblatt (10) zusätzlich an der Profilvorderkante (16) und/oder der Profilhinterkante (17) geteilt ist.

5. Rotorblatt (10) nach einem der Ansprüche 1 bis 4, **dadurch gekennzeichnet, dass** der Steg (26, 27, 90, 91, 96, 99) mit den Gurten (28, 29; 30, 31) verbunden, insbesondere verklebt, ist, wobei sich der Steg (26, 27, 90, 91, 96, 99) von der Saugseite (18) zur Druckseite (19) erstreckt, so dass der Steg (26, 27, 90, 91, 96, 99) mit den Gurtteilen (28, 29; 30, 31) den I-Träger (25) bildet.

6. Verfahren zum Fertigen eines Rotorblatts (10) einer Windenergieanlage, wobei das gefertigte Rotorblatt (10) in seiner Längserstreckung (11), die sich von einer Rotorblattwurzel (12) im Wesentlichen zu einer Rotorblattspitze (13) erstreckt, wenigstens einen Bereich (14) aufweist, in der das Rotorblatt (10) ein aerodynamisches Querschnittsprofil (15) aufweist, das eine Profilvorderkante (16) und eine Profilhinterkante (17) aufweist, die über eine Saugseite (18) und eine Druckseite (19) des Querschnittsprofils (15) verbunden sind, **gekennzeichnet durch** die folgenden Verfahrensschritte:
- Vorsehen wenigstens zweier in Längsrichtung (11) des Rotorblatts (10) gefertigter und geteilter Rotorblattabschnitte (21, 22), wobei die Teilung zwischen der Profilvorderkante (16) und der Profilhinterkante (17) angeordnet ist, und wobei das Rotorblatt (10) wenigstens in einen vorderen Rotorblattabschnitt (21) mit der Profilvorderkante (16) und einen hinteren Rotorblattabschnitt (22) mit der Profilhinterkante (17) unterteilt ist,
- Auf- oder Einbringen eines sich im Wesentlichen von der Druckseite (19) zu der Saugseite (18) erstreckenden ersten Stegteils (26) in einen ersten geteilten Rotorblattabschnitt (21) und eines zweiten sich im Wesentlichen von der Druckseite (19) zu der Saugseite (18) erstreckenden zweiten Stegteils (27) in einen zweiten geteilten Rotorblattabschnitt (22) und
- Verbinden, insbesondere Verkleben, des ersten Stegteils (26) mit dem zweiten Stegteil (27), so dass sich ein Doppelsteg (47) bildet,
- wobei das Auf- oder Einbringen des ersten und des zweiten Stegteils (26, 27) ein Verbinden, insbesondere Ankleben, des ersten und zweiten Stegteils (26, 27) an jeweils einen Gurt (28, 29) an der Druckseite (19) und einen Gurt (30, 31) an der Saugseite (18) je Rotorblattabschnitt (21, 22) umfasst, wobei sich **durch** das Verbinden, insbesondere Verkleben, des ersten Stegteils (26) mit dem zweiten Stegteil (27) ein I-Träger (25) umfassend vier Gurte (28-31) und einen Doppelsteg (47) bildet.

7. Verfahren zum Fertigen eines Rotorblatts (10) einer Windenergieanlage, wobei das gefertigte Rotorblatt (10) in seiner Längserstreckung (11), die sich von einer Rotorblattwurzel (12) im Wesentlichen zu einer Rotorblattspitze (13) erstreckt, wenigstens einen Bereich (14) aufweist, in der das Rotorblatt (10) ein aerodynamisches Querschnittsprofil (15) aufweist, das eine Profilvorderkante (16) (Nase) und eine Profilhinterkante (17) aufweist, die über eine Saugseite (18) und eine Druckseite (19) des Querschnittsprofils (15) verbunden sind, **gekennzeichnet durch** die folgenden Verfahrensschritte:
- Vorsehen wenigstens zweier in Längsrichtung (11) des Rotorblatts (10) gefertigter und geteilter Rotorblattabschnitte (21, 22), wobei die Teilung zwischen der Profilvorderkante (16) und der Profilhinterkante (17) angeordnet ist, und wobei das Rotorblatt (10) wenigstens in einen vorderen Rotorblattabschnitt (21) mit der Profilvorderkante (16) und einen hinteren Rotorblattabschnitt (22) mit der Profilhinterkante (17) unterteilt ist,
- Auf- oder Einbringen eines sich im Wesentlichen von der Druckseite (19) zu der Saugseite (18) erstreckenden Stegs (26, 27, 90, 91, 96, 99), der wenigsten zwei Stegfüße (64-67, 92, 93, 97, 98, 100, 101) aufweist, in einen ersten geteilten Rotorblattabschnitt (21, 22), so dass ein Teil der Stegfüße (64-67, 92, 93, 97, 98, 100, 101) aus dem Rotorblattabschnitt (21, 22) herausragt,
- Verkleben der herausragenden Teile der Stegfüße (64-67, 92, 93, 97, 98, 100, 101) mit einem zweiten geteilten Rotorblattabschnitt (21, 22), wobei **durch** das Verkleben des Stegs (26, 27, 90, 91, 96, 99) mit den Rotorblattabschnitten (21, 22) sich ein I-Träger (25) umfassend vier Gurte (28-31) und den Steg (26, 27, 90, 91, 96, 99) bildet.

8. Verfahren nach Anspruch 6 oder 7, **dadurch gekennzeichnet, dass** zum Vorsehen von zwei in Längserstreckung (11) des Rotorblatts (10) gefertigter und geteilter Rotorblattabschnitte (21, 22) wenigstens bei einem Rotorblattabschnitt (21, 22), ein Saugseitenabschnitt (32, 33) und ein Druckseitenabschnitt (34, 35) miteinander verbunden, insbesondere verklebt, werden, wobei insbesondere die beiden Rotorblattabschnitte (32-35) einen Nasenkasten (21) und/oder einen Endkasten (22) bilden, wobei insbesondere zum Vorsehen von zwei in Längserstreckung (11) des Rotorblatts (10) gefertigter und geteilter Rotorblattabschnitte (21, 22) jeweils ein Gurt (28-31) mit einer Saugseite (18) und einer Druckseite (19) jedes Rotorblattabschnitts (21, 22) verbunden, insbesondere verklebt, wird.

9. Verfahren zum Herstellen eines Gurtpaares (28, 29; 30, 31) eines Rotorblatts (10) einer Windenergieanlage nach einem der Ansprüche 1 bis 5, wobei das Gurtpaar (28, 29; 30, 31) in einer Fertigungsform (54, 55) hergestellt wird, die die Kontur des Rotorblattes (10) im Bereich des Gurtpaares (28, 29; 30, 31) aufweist und sich wenigstens über die Länge (20) eines Abschnitts des Rotorblatts (10) erstreckt.

10. Verfahren nach Anspruch 9, **dadurch gekennzeichnet, dass** der Abschnitt sich von einem Bereich in der Nähe der Rotorblattwurzel (12) bis zur Rotorblattspitze (13) oder bis zu einem Abschnittsende des Rotorblatts (10) in der Nähe der Rotorblattspitze (13) erstreckt, wobei insbesondere ein Zwischensteg (56, 57) in der Fertigungsform (54, 55) vorgesehen ist, der entweder einstückig mit der Fertigungsform (54, 55) als Zwischensteg (57) ausgebildet ist oder als ein herausnehmbarer Zwischensteg (56) ausgebildet ist, wobei insbesondere der Zwischensteg (56, 57) ein Mittelsteg ist.

## Claims

1. A rotor blade (10) of a wind power installation, wherein the rotor blade (10) has a longitudinal extension (11) which extends substantially from a rotor blade root (12) to a rotor blade tip (13), wherein an aerodynamic cross-section profile (15) is provided at least in one area of the rotor blade (10), which has a profile leading edge (16) (nose) and a profile trailing edge (17), which are connected via a suction side (18) and a pressure side (19) of the cross-section profile (15), **characterised in that** the rotor blade (10) is sub-divided into a frontal rotor blade section (21) with the profile leading edge (16) and into a rear rotor blade section (22) with the profile trailing edge (17), at least in a longitudinally extended section (20), wherein the rear area (23) of the frontal rotor blade section (21) and the adjacent front area (24) of the rear rotor blade section (22) are connected by a I-beam (25), wherein the I-beam (25) has I-beam parts (26-31) which comprise a bar (26, 27, 90, 91, 96, 99), wherein the I-beam (25) is divided in longitudinal extension and two-dimensional in a plane which is defined by the bar (26, 27, 90, 91, 96, 99), wherein two belts complete the I-beam (25) towards the suction side (18) and the pressure side (19) respectively, which have a space between each other, which is smaller than the extension of the belts (28-31) in the direction of the profile leading edge (16) to the profile trailing edge (17).

2. The rotor blade (10) according to claim 1, **characterised in that** the I-beam (25) has a bar (26, 27, 90, 91, 96, 99) which extends from the pressure side (19) to the suction side (18) within the rotor blade (10), and a belt (28, 29) on the pressure side (19) and a belt (30, 31) on the suction side (18), wherein the bar (26, 27, 90, 91, 96, 99) comprises bar feet (64-67, 92, 93, 97, 98, 100, 101) which, together with the bar (26, 27, 90, 91, 96, 99), form the shape of a square bracket (], [) or the shape of a Z.

3. The rotor blade (10) according to claim 1 or 2, **characterised in that** the I-beam parts (26, 27) are connected, particularly adhered, to each other.

4. The rotor blade (10) according to one of claims 1 to 3, **characterised in that** the rotor blade (10) is additionally divided on the profile leading edge (16) and/or the profile trailing edge (17).

5. The rotor blade (10) according to one of claims 1 to 4, **characterised in that** the bar (26, 27, 90, 91, 96, 99) is connected, particularly adhered, to the belts (28, 29; 30, 31), wherein the bar (26, 27, 90, 91, 96, 99) extends from the suction side (18) to the pressure side (19), so that the bar (26, 27, 90, 91, 96, 99) and the belt parts (28, 29; 30, 31) form the I-beam (25).

6. A method of fabricating a rotor blade (10) of a wind power installation, wherein the fabricated rotor blade (10) has in its longitudinal extension (11), which extends substantially from a rotor blade root(12) to a rotor blade tip (13), at least one area (14) in which the rotor blade (10) has an aerodynamic cross-section profile (15), which has a profile leading edge (16) and a profile trailing edge (17), which are connected via a suction side (18) and a pressure side (19) of the cross-section profile (15), **characterised by** the following method steps:
- Providing at least two rotor blade sections (21, 22) fabricated and divided in the longitudinal direction (11) of the rotor blade (10), wherein the division is arranged between the profile leading edge (16) and the profile trailing edge (17), and wherein the rotor blade (10) is sub-divided at least into one frontal rotor blade section (21) with the profile leading edge (16) and one rear rotor blade section (22) with the profile trailing edge (17),
- Applying or inserting a first bar part (26) extending substantially from the pressure side (19) to the suction side (18) into a first, divided rotor blade section (21) and a second bar part (27) extending substantially from the pressure side (19) to the suction side (18) into a second, divided rotor blade section (22), and
- Connecting, particularly adhering, the first bar part (26) to the second bar part (27), so that a double bar (47) is formed,
- Wherein applying or inserting the first and the second bar part (26, 27) comprises connecting, particularly adhering, the first and the second bar part (26, 27) each to a belt (28, 29) on the pressure side (19) and a belt (30, 31) on the suction side (18) per rotor blade section (21, 22), wherein, by connecting, particularly adhering, the first bar part (26) to the second bar part (27), a I-beam (25) comprising four belts (28-31) and a double bar (47), is formed.

7. A method of fabricating a rotor blade (10) of a wind power installation, wherein the fabricated rotor blade (10) has in its longitudinal extension (11), which extends substantially from a rotor blade root (12) to a rotor blade tip (13), at least one area (14) in which the rotor blade (10) has an aerodynamic cross-section profile (15), which has a profile leading edge (16) (nose) and a profile trailing edge (17), which are connected via a suction side (18) and a pressure side (19) of the cross-section profile (15), **characterised by** the following method steps:
- Providing at least two rotor blade sections (21, 22) fabricated and divided in the longitudinal direction (11) of the rotor blade (10), wherein the division is arranged between the profile leading edge (16) and the profile trailing edge (17), and wherein the rotor blade (10) is sub-divided at least into one frontal rotor blade section (21) with the profile leading edge (16) and one rear rotor blade section (22) with the profile trailing edge (17),
- Applying or inserting a bar (26, 27, 90, 91, 96, 99) extending substantially from the pressure side (19) to the suction side (18), which has at least two bar feet (64-67, 92, 93, 97, 98, 100, 101), into a first, divided rotor blade section (21, 22), so that a part of the bar feet (64-67, 92, 93, 97, 98, 100, 101) protrudes out of the rotor blade section (21, 22),
- Adhering the protruding parts of the bar feet (64-67, 92, 93, 97, 98, 100, 101) to a second, divided rotor blade section (21, 22), wherein, by adhering the bar (26, 27, 90, 91, 96, 99) to the rotor blade sections (21, 22), a I-beam (25) comprising four belts (28-31) and the bar (26, 27, 90, 91, 96, 99) is formed.

8. The method according to claim 6 or 7, **characterised in that**, to provide two rotor blade sections (21, 22) fabricated and divided in the longitudinal extension (11) of the rotor blade (10), at least for one rotor blade section (21, 22), a suction side section (32, 33) and a pressure side section (34, 35) are connected, particularly adhered, wherein particularly both rotor blade sections (32-35) form a nose box (21) and/or an end box (22), wherein, particularly to provide two rotor blade sections (21, 22) fabricated and divided in the longitudinal extension (11) of the rotor blade (10), a belt (28-31) is connected, particularly adhered, to a suction side (18) and a pressure side (19) respectively of each rotor blade section (21, 22).

9. A method of producing a pair of belts (28, 29; 30, 31) of a rotor blade (10) of a wind power installation according to one of claims 1 to 5, wherein the pair of belts (28, 29; 30, 31) is produced in a fabrication mould (54, 55) which has the contour of the rotor blade (10) in the area of the pair of belts (28, 29; 30, 31) and extends at least over the length (20) of one section of the rotor blade (10).

10. The method according to claim 9, **characterised in that** the section extends from an area near the rotor blade root (12) as far as the rotor blade tip (13) or as far as the end of a section of the rotor blade (10) near the rotor blade tip (13), wherein particularly an intermediate bar (56, 57) is provided in the fabrication mould (54, 55), which is either formed together with the fabrication mould (54, 55) as a single piece as an intermediate bar (57) or is formed as a removable intermediate bar (56), wherein particularly the intermediate bar (56, 57) is a middle bar.

## Revendications

1. Pale de rotor (10) d'une éolienne, la pale de rotor (10) présentant une extension longitudinale (11) qui s'étend à partir d'une racine (12) de pale de rotor jusqu'à sensiblement une extrémité (13) de pale de rotor, un profil de section transversale (15) aérodynamique étant prévu dans au moins une zone de la pale de rotor (10), qui présente un bord d'attaque (16) (nez), et un bord de fuite (17), qui sont reliés par un côté d'aspiration (18) et un côté de pression (19) du profil de section transversale (15), **caractérisée en ce que** la pale de rotor (10) est divisée en au moins une partie (20) d'extension longitudinale se prolongeant en une portion avant (21) de pale ayant le bord d'attaque (16) et une portion arrière (22) de pale ayant le bord de fuite (17), ladite zone arrière (23) de la portion avant (21) de pale et la zone avant (24) adjacente de la portion arrière (22) de pale sont reliées par une poutre en I (25), la poutre en I (25) présente des parties (26 à 31) de poutres en I et qui forme une nervure (26, 27, 90, 91, 96, 99), la poutre en I (25) étant divisée en une partie plate s'étendant selon un plan dans la direction longitudinale, qui est définie par la nervure (26, 27, 90, 91, 96, 99), depuis le côté d'aspiration (18) et vers le côté de pression (19), et en deux bandes (28-31) pour compléter la poutre en I (25), ayant une distance l'une par rapport à l'autre qui est inférieure à la distance d'extension des bandes (28 -31) dans la direction allant du bord d'attaque (16) au bord de fuite (17).

2. Pale de rotor (10) selon la revendication 1, **caractérisée en ce que** la poutre en I (25) présente une nervure (26, 27, 90, 91, 96, 99) s'étendant à l'intérieur de la pale de rotor (10) à partir du côté de pression (19) vers le côté d'aspiration (18), une bande (28, 29) sur le côté de pression (19) ainsi qu'une bande (30, 31) sur le côté d'aspiration (18), la nervure (26, 27, 90, 91, 96, 99) comprenant des pieds de nervure (64-67, 92, 93, 97, 98, 100, 101) qui constituent, avec la nervure (26, 27, 90, 91, 96, 99), une forme en crochet (], [) ou une forme en Z.

3. Pale de rotor (10) selon la revendication 1 ou la revendication 2, **caractérisée en ce que** les parties (26, 27) de poutres en I sont reliées entre elles, en particulier sont collées.

4. Pale de rotor (10) selon l'une quelconque des revendications 1 à 3, **caractérisée en ce que** la pale de rotor (10) est divisée de façon supplémentaire au niveau du bord d'attaque (16) et / ou au niveau du bord de fuite (17).

5. Pale de rotor (10) selon l'une quelconque des revendications 1 à 4, **caractérisée en ce que** la nervure (26, 27, 90, 91, 96, 99) est reliée, en particulier collée, aux bandes (28, 29; 30, 31), la nervure (26, 27, 90, 91, 96, 99) s'étendant depuis le côté d'aspiration (18) vers le côté de pression (19), de sorte que la nervure (26, 27, 90, 91, 96, 99) forme la poutre en I (25) avec les parties de bande (28, 29; 30,31).

6. Procédé de fabrication d'une pale de rotor (10) d'une éolienne, dans lequel la pale de rotor (10) fabriquée, dans son extension longitudinale (11), qui s'étend depuis une racine (12) de pale de rotor jusqu'à sensiblement une extrémité (13) de pale de rotor, comprend au moins une zone (14) dans laquelle la pale de rotor (10) présente un profil de section transversale (15) aérodynamique, ayant un bord d'attaque (16) et un bord de fuite (17), qui sont reliés par un côté d'aspiration (18) et un côté de pression (19) du profilé de section transversale (15), **caractérisé par** les étapes de procédé suivantes :
- prévoir au moins deux portions de pale de rotor (21, 22), qui sont fabriquées en étant divisées dans la direction longitudinale (11) de la pale de rotor (10), la division étant aménagée entre le bord d'attaque (16) et le bord de fuite (17), et la pale de rotor (10) étant divisée en au moins une portion avant (21) de pale ayant le bord d'attaque (16) et une portion arrière (22) de pale ayant le bord de fuite (17),
- appliquer ou introduire une première partie de nervure (26), s'étendant substantiellement depuis le côté de pression (19) vers le côté d'aspiration (18) sur une première portion de pale de rotor divisée (21), et une deuxième partie de nervure (27), s'étendant substantiellement depuis le côté de pression (19) vers le côté d'aspiration (18) sur une deuxième portion de pale de rotor divisée (22), et
- relier, en particulier coller, la première partie de nervure (26) avec la deuxième partie de nervure (27), de sorte qu'une double nervure (47) soit formée,
- l'application ou l'introduction de la première et de la deuxième partie de nervure (26, 27) comprend un raccordement, en particulier un collage, de la première et deuxième partie de nervure (26, 27) à, respectivement, une bande (28, 29) située sur le côté de pression (19) et une bande (30, 31) située sur le côté d'aspiration (18) de chaque portion de pale de rotor (21, 22), de sorte que par la liaison, en particulier le collage, de la première partie de nervure (26) à ladite deuxième partie de nervure (27) il soit réalisé une poutre en I (25) comprenant quatre bandes (28-31) et une double nervure (47).

7. Procédé de fabrication d'une pale de rotor (10) d'une éolienne, dans lequel la pale de rotor fabriquée (10), dans son extension longitudinale (11) qui s'étend depuis une racine (12) de pale de rotor jusqu'à sensiblement une extrémité (13) de pale de rotor, comprend au moins une zone (14) dans laquelle la pale de rotor (10) présente un profil de section transversale (15) aérodynamique, ayant un bord d'attaque (16) (nez), et un bord de fuite (17), qui sont reliés par un côté d'aspiration (18) et un côté de pression (19) du profilé de section transversale (15), **caractérisé par** les étapes de procédé suivantes :
- prévoir au moins deux portions de pale de rotor (21, 22), qui sont fabriquées en étant divisées dans la direction longitudinale (11) de la pale de rotor (10), la division étant aménagée entre le bord d'attaque (16) et le bord de fuite (17), et la pale de rotor (10) étant divisée en au moins une portion avant (21) de pale ayant le bord d'attaque (16) et une portion arrière (22) de pale ayant le bord de fuite (17),
- appliquer ou introduire une nervure (26, 27, 90, 91, 96, 99), s'étendant substantiellement depuis le côté de pression (19) vers le côté d'aspiration (18), qui comprend au moins deux pieds de nervure (64 à 67, 92, 93, 97, 98, 100, 101), sur une première portion de pale de rotor divisée (21, 22), de sorte qu'une partie des pieds de nervure (64-67, 92, 93, 97, 98, 100, 101) fasse saillie de la portion de pale de rotor (21, 22),
- coller les parties en saillie des pieds de nervure (64 67, 92, 93, 97, 98, 100, 101) à une deuxième portion de pale de rotor divisée (21, 22), de sorte que, par le collage, de la nervure (26, 27, 90, 91, 96, 99) avec les portions de pale de rotor (21, 22), il soit formé une poutre en I (25) comprenant quatre bandes (28-31) et la nervure (26, 27, 90, 91, 96, 99).

8. Procédé selon la revendication 6 ou la revendication 7, **caractérisé en ce que**, pour la réalisation de deux portions de pale de rotor (21, 22) fabriquées et divisées dans la direction longitudinale (11) de la pale de rotor (10), au moins pour une portion de pale de rotor (21, 22), une portion (32, 33) de côté d'aspiration et une portion (34, 35) de côté de pression sont reliées l'une avec l'autre, en particulier collé, moyennant quoi, en particulier, les deux portions de pale de rotor (32 35) forment un caisson formant nez (21) et / ou un caisson d'extrémité (22), en particulier, pour la réalisation de deux portions de pale de rotor (21, 22) fabriquées et divisées dans la direction longitudinale (11) de la pale de rotor (10), une bande (28 à 31) est reliée, en particulier est collée, respectivement à un côté d'aspiration (18) et à un côté de pression (19) de chaque portion de pale de rotor (21, 22).

9. Procédé de fabrication d'un ensemble de bandes (28, 29; 30, 31) d'une pale de rotor (10) pour une éolienne selon l'une quelconque des revendications 1 à 5, dans lequel l'ensemble de bandes (28, 29; 30, 31) est réalisée dans un moule de fabrication (54, 55) qui présente le contour de la pale de rotor (10) dans la zone de l'ensemble de bandes (28, 29 ; 30, 31) et qui s'étend au moins sur la longueur (20) d'une portion de la pale de rotor (10).

10. Procédé selon la revendication 9, **caractérisé en ce que** la portion s'étend depuis une zone proche de la racine (12) de pale de rotor jusqu'à l'extrémité (13) de pale de rotor ou jusqu'à une extrémité d'une portion de la pale de rotor (10) située au voisinage de l'extrémité (13) de pale de rotor, une nervure intermédiaire (56, 57) étant en particulier prévue dans le moule de fabrication (54, 55), qui est formée soit d'un seul tenant avec le moule de fabrication (54, 55), en tant que nervure intermédiaire (57) ou en tant que nervure amovible (56), la nervure intermédiaire (56, 57) étant, en particulier, une nervure centrale.
